# FASCICULE DE BREVET EUROPEEN

(11) **EP 3 487 656 B1**
(45) Date de publication et mention de la délivrance du brevet: **11.08.2021**
(21) Numéro de dépôt: 17748557.0
(22) Date de dépôt: 25.07.2017
(51) Int. Cl.: B23K 26/359, B23K 26/53, B23K 26/0622, B23K 26/067, B23K 26/38, B23K 103/00

(54) **PROCÉDÉ ET APPAREIL POUR LA DÉCOUPE DE MATÉRIAUX PAR MULTI-FAISCEAUX LASER FEMTOSECONDE**
VERFAHREN UND VORRICHTUNG ZUM SCHNEIDEN VON MATERIALIEN MIT EINEM MEHRSTRAHLIGEN FEMTOSEKUNDENLASER
METHOD AND APPLIANCE FOR CUTTING MATERIALS BY MULTI-BEAM FEMTOSECOND LASER

(30) Priorité: 25.07.2016 FR 1657138; 25.07.2016 FR 1657139
(43) Date de publication de la demande: 29.05.2019
(73) Titulaire: Amplitude, 33600 Pessac (FR); Centre National de la Recherche Scientifique, 75016 Paris (FR); Université de Bordeaux, 33000 Bordeaux (FR); ALPHANOV, 33400 TALENCE (FR)
(72) Inventeur: MISHCHIK, Konstantin, Bordeaux 33000 (FR); LOPEZ, John, 33170 Gradignan (FR); KLING, Rainer, 33610 Cestas (FR); JAVAUX-LEGER, Clémentine, 33850 Leognan (FR); DUCHATEAU, Guillaume, 33600 Pessac (FR); DEMATTEO-CAULIER, Ophélie, 40160 Ychoux (FR)
(74) Mandataire: Jacobacci Coralis Harle
(86) Numéro de dépôt international: PCT/FR2017/052072
(87) Numéro de publication internationale: WO 2018/020145

(56) Documents cités:
- EP-A1- 2 476 505
- WO-A1-2014/079478
- US-A1- 2015 121 960
- US-A1- 2015 158 120

## Description

### DOMAINE TECHNIQUE AUQUEL SE RAPPORTE L'INVENTION

La présente invention concerne de manière générale le domaine des procédés et dispositifs de traitement des matériaux diélectriques ou semiconducteurs par laser.

Elle concerne plus particulièrement une méthode de découpe de matériaux diélectriques transparents ou semiconducteurs, d'épaisseur comprise entre quelques dixièmes de millimètre et quelques millimètres.

Elle concerne en particulier un procédé rapide de découpe, formant des bords de découpe lisses, sans écailles et sans perte de matériau.

### ARRIERE-PLAN TECHNOLOGIQUE

Les matériaux inorganiques diélectriques transparents tels que par exemple le verre, le quartz ou le saphir, ou semiconducteurs, tels que le silicium ou le germanium, sont de plus en plus utilisés dans les écrans plats de dispositifs électroniques, l'optique, l'optoélectronique ou encore l'industrie horlogère. L'usinage de ces matériaux et en particulier la découpe de précision, posent des difficultés techniques et industrielles spécifiques. La technique de découpe doit satisfaire des impératifs industriels de grande vitesse de coupe, tout en minimisant l'apparition de contraintes résiduelles dans le matériau et en garantissant une bonne qualité de coupe, c'est-à-dire un bord de découpe lisse, sans écailles (chipping en anglais) et sans amorçage de microfissure, de manière à pouvoir s'affranchir d'étapes de post-traitement tels que le polissage ou le meulage de précision.

On souhaite effectuer non seulement des découpes rectilignes mais aussi des découpes curvilinéaires, sur des longueurs et épaisseurs variables.

Il existe différentes techniques de découpe de matériaux transparents. Les techniques mécaniques reposent sur l'utilisation d'un d'outil revêtu de grains en diamant, par exemple une scie diamantée, ou encore la prédécoupe à l'aide d'une roulette diamantée ou en acier durci précédant une séparation des pièces obtenue par application d'une force mécanique. Une autre technique de découpe consiste à appliquer un jet d'eau sous pression de plusieurs milliers de bars, pour éroder le verre sur toute son épaisseur, l'eau pouvant être chargée de particules abrasives.

Plus récemment, différentes techniques de découpe par laser ont été développées.

La découpe laser par initiation de fracture consiste à produire une entaille en surface d'un matériau clivable par ablation laser de manière à initier une fracture.

La découpe par fusion de verre, saphir ou céramique transparente est obtenue par un chauffage laser du matériau jusqu'à un état fondu puis par une éjection du matériau fondu au travers de la saignée au moyen d'un gaz sous pression (azote ou air). Un laser émettant dans l'infrarouge lointain, tel qu'un laser CO₂ par exemple, produit une absorption et un chauffage depuis la surface, la chaleur diffusant par conduction de la surface vers le cœur du matériau. Au contraire, un laser émettant dans le proche infrarouge, par exemple un laser YAG, à disque ou à fibre, induit directement une absorption en volume. La découpe par fusion se fait en général à une température bien supérieure à la température de transition vitreuse Tg à laquelle le matériau n'a qu'une très faible viscosité. Cette haute température conduit à affecter thermiquement une large zone, ce qui favorise l'apparition de micro fissures et d'écailles le long de la trajectoire de découpe. Pour cette raison, des étapes de post-traitement par polissage ou par meulage sont en général nécessaires après une découpe par fusion.

Le procédé d'inscription et casse (scribe & break) consiste à produire un sillon par ablation laser en surface du matériau à découper, puis à appliquer une force mécanique pour séparer les deux parties. La rupture se fait le long de la trajectoire définie par le sillon. La profondeur du sillon est de l'ordre de 10 à 20 micromètres (µm). La vitesse de découpe est importante, d'au moins 10 mm/s. Cependant, ce procédé génère de la poussière d'ablation et des déviations du plan de coupe peuvent apparaître au voisinage de la face arrière.

Le document EP 2476505 A1, qui forme la base des préambules des revendications 1 et 7, décrit un procédé et système de traitement laser basé sur une division et focalisation d'un faisceau laser à impulsions ultracourtes en deux spots laser en contact de manière à former un spot elliptique dans un matériau et générer une fracture suivant l'axe joignant les deux spots.

Le document US2015/0158120 A1 décrit une technique de perçage de matériaux de type semi-conducteur ou verre comprenant l'émission d'une première impulsion laser mise en forme spatialement pour générer un canal de plasma dans le matériau et l'émission d'une deuxième onde électromagnétique superposée spatialement au canal de plasma de manière à chauffer le matériau et produire un perçage.

La découpe complète par ablation laser (full ablation cutting) au moyen d'impulsions courtes ou ultracourtes permet d'obtenir une séparation spontanée du verre sans aucune assistance mécanique. Dans le présent document, on entend par impulsions courtes des impulsions de durée comprise entre 1 nanoseconde (ns) 1 microseconde (µs), respectivement, par impulsions ultracourtes des impulsions de durée comprise entre 10 femtosecondes (fs) et 1 nanoseconde (ns).

La technique de découpe complète par ablation laser est adaptable à différentes trajectoires et motifs de découpe : lignes droites ou courbes, suivant une figure géométrique fermée, faible rayon de courbure, chanfrein. Du fait de l'utilisation d'un matériau transparent, ce procédé peut être appliqué, en initiant l'ablation par focalisation sur la surface supérieure sur laquelle le faisceau laser est incident, comme c'est le cas pour des matériaux non transparents, mais aussi en initiant l'ablation par focalisation sur la surface inférieure en remontant vers la surface supérieure (technique « bottom-up » en anglais). Cependant, la découpe complète par ablation laser est un procédé plus lent que les autres procédés mentionnés ci-dessus pour les matériaux épais du fait qu'il conduit à l'enlèvement d'une importante quantité de matière. De plus, les bords de la découpe produits par ablation laser sont généralement rugueux. Enfin, ce procédé génère une grande quantité de poussière et une large entaille dans le matériau. Des ébréchures (chipping) peuvent apparaître dans certaines conditions.

La découpe laser par propagation de fracture contrôlée repose sur l'utilisation d'un laser YAG ou CO₂ pour générer une encoche sur le bord d'une plaque de verre puis l'application d'un faisceau laser de puissance tout en effectuant un mouvement relatif entre la plaque de verre et le faisceau laser. Le faisceau laser est absorbé en surface pour un laser CO₂ ou en volume pour un laser YAG. Le fort gradient de température généré par le faisceau laser est augmenté par un refroidissement rapide après le faisceau laser. Ce fort gradient thermique induit une contrainte de tension transitoire qui provoque l'initiation d'une fracture à partir de l'encoche initiale. Ensuite, cette fracture se propage le long de la trajectoire du faisceau laser. Les parties découpées sont libérées sans assistance mécanique et présentent une excellente qualité de découpe pour des trajectoires rectilignes : bords droits, lisses et sans défauts. Malgré ces nombreux avantages, la propagation de fracture contrôlée présente des inconvénients tels que des incertitudes et imprécisions de découpe dus à des déviations du chemin de découpe et un nombre important de parties cassées. De plus, la découpe de petites pièces ou de trajectoires courbes ayant un petit rayon de courbure (<1mm) est quasiment impossible. Enfin, la vitesse de découpe est limitée par la propagation de la fracture (quelques dizaines de mm/s).

Il existe donc un besoin de développer une technique de découpe de matériaux inorganiques diélectriques transparents ou semiconducteurs, notamment de plaques de verre, quartz ou saphir, qui permette d'obtenir une découpe présentant des bords nets, lisses, suivant des trajectoires rectilignes suivant une ligne directrice définissant une surface de coupe plane ou suivant des trajectoires courbes suivant une ligne directrice définissant une surface de coupe cylindrique ou conique et avec une grande vitesse de découpe.

### OBJET DE L'INVENTION

Afin de remédier à l'inconvénient précité de l'état de la technique, la présente invention propose un procédé suivant la revendication 1 pour la découpe de matériau diélectrique ou semiconducteur par laser.

D'autres caractéristiques non limitatives et avantageuses du procédé pour la découpe de matériau diélectrique ou semiconducteur par laser conforme à l'invention, prises individuellement ou selon toutes les combinaisons techniquement possibles, sont les suivantes :
- les impulsions ont une durée comprise entre 10 et 900 femtosecondes, le nombre N d'impulsions femtosecondes dans ladite rafale est inférieur ou égal à 20, ladite source laser ayant une cadence comprise entre 1 kHz à 1 GHz, la longueur d'onde du faisceau laser est comprise entre 250 nm et 2,2 µm, la première énergie et la deuxième énergie sont inférieures à 1 mJ et supérieures à 1 nJ ;
- le faisceau laser émis par la source laser ayant une distribution spatiale Gaussienne, le premier faisceau divisé et le deuxième faisceau divisé sont mis en forme spatialement de manière à présenter chacun une distribution spatiale en faisceau de Bessel ;
- la distribution spatiale en faisceau de Bessel du premier faisceau divisé est modifiée transversalement et/ou longitudinalement suivant l'axe optique du premier faisceau divisé dans la première zone et/ou, respectivement, la distribution spatiale en faisceau de Bessel du deuxième faisceau divisé est modifiée transversalement et/ou longitudinalement suivant l'axe optique du deuxième faisceau divisé dans la deuxième zone ;
- l'étape de séparation spatiale du faisceau laser est adaptée pour générer une pluralité de M faisceaux divisés spatialement, les M faisceaux divisés étant de préférence parallèles à l'axe Z et les M faisceaux divisés définissant une portion de surface de découpe, où M est un nombre entier naturel supérieur ou égal à trois, la pluralité de M faisceaux divisés spatialement présentant un décalage latéral l'un par rapport à l'autre pris deux à deux, et dans lequel
- l'étape de concentration spatiale d'énergie comprend la concentration spatiale d'énergie de la pluralité de M faisceaux divisés dans une pluralité de M zones disjointes du matériau, les M zones disjointes étant disposées sur une surface générée par une ligne directrice, ladite surface étant plane, cylindrique ou conique, chaque faisceau divisé ayant une énergie supérieure à un seuil de modification du matériau, de manière à initier une pluralité de modifications localisées dans la pluralité de M zones disjointes du matériau ; et
- ajustement de distance (dx) entre deux zones quelconques parmi la pluralité de M zones disjointes inférieure à un seuil de distance, compris entre 1 micromètre et une dizaine de micromètres de manière à initier une micro-fracture rectiligne orientée, cette micro-fracture étant orientée suivant une direction de microfracturation s'étendant entre lesdites deux zones quelconques parmi la pluralité de M zones disjointes ;
- le procédé comprend en outre une étape de déplacement relatif entre lesdits faisceaux divisés et le matériau.

De façon avantageuse, le procédé comprend en outre une étape supplémentaire d'application d'un autre faisceau laser décalé latéralement d'une distance inférieure à un millimètre par rapport à ladite micro-fracture, cet autre faisceau laser présentant une énergie inférieure au seuil d'ablation du matériau de façon à apporter une contrainte thermique sans micro-fracturation supplémentaire du matériau diélectrique ou semiconducteur.

L'invention propose également un appareil suivant la revendication 7 pour la découpe par laser de matériau diélectrique ou semiconducteur comprenant une source laser adaptée pour émettre un faisceau laser à une longueur d'onde dans une bande spectrale de transparence du matériau.

D'autres caractéristiques non limitatives et avantageuses de l'appareil pour la découpe de matériau diélectrique ou semiconducteur par laser conforme à l'invention, prises individuellement ou selon toutes les combinaisons techniquement possibles, sont les suivantes :
- le premier faisceau divisé ayant une étendue spatiale transverse égale à D dans la première zone, le deuxième faisceau divisé ayant une étendue spatiale transverse égale à D dans la deuxième zone, où D est inférieur ou égal à 2 micromètres et où la distance dx est supérieure ou égale à 1 micromètre et inférieure ou égale à une dizaine de micromètres ;
- l'appareil comprend en outre un système de déplacement relatif entre, d'une part, le matériau solide et, d'autre part, le premier faisceau divisé et le deuxième faisceau divisé ;
- la source laser est configurée pour délivrer des impulsions de durée comprise entre 10 et 900 femtoseconde, à une longueur d'onde comprise entre 250 nm et 2,2 µm et à une cadence de 1 kHz à 10 GHz et de préférence de 1GHz à 10 GHz, où le nombre N d'impulsions femtosecondes dans ladite rafale est inférieur ou égal à 20 ;

- le dispositif optique de concentration spatiale d'énergie est configuré pour générer une pluralité de points de focalisation du premier faisceau divisé le long du premier axe optique dans la première zone, et, respectivement, une autre pluralité de points de focalisation du deuxième faisceau divisé le long du deuxième axe optique dans la deuxième zone ;
- le dispositif optique de séparation spatiale et/ou le dispositif optique de concentration spatiale d'énergie est configuré de manière à générer une distribution spatiale d'intensité en faisceau de Bessel le long du premier axe optique et, respectivement, du deuxième axe optique ;
- le dispositif optique de séparation spatiale et/ou le dispositif optique de concentration spatiale d'énergie comprend un modulateur spatial de phase et/ou d'amplitude ou un masque de phase et/ou d'amplitude configuré pour modifier une distribution spatiale d'intensité du premier faisceau divisé transversalement au premier axe optique dans la première zone et, respectivement, pour modifier une distribution spatiale d'intensité du deuxième faisceau divisé transversalement au deuxième axe optique dans la deuxième zone ;
- le dispositif optique de concentration spatiale d'énergie comprend un autre masque de phase et/ou d'amplitude configuré pour modifier une distribution spatiale d'intensité du premier faisceau divisé le long de l'axe optique du premier faisceau divisé dans la première zone et, respectivement, pour modifier une distribution spatiale d'intensité du deuxième faisceau divisé le long de l'axe optique du deuxième faisceau divisé dans la deuxième zone ;
- le matériau diélectrique est choisi parmi un verre d'épaisseur comprise entre 100 micromètres et quelques millimètres, la longueur d'onde du laser est comprise entre 250 nm et 2,2 µm, la première énergie et la deuxième énergie sont inférieures à 1 mJ et supérieures à 1 nJ.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente un schéma de principe du procédé de découpe de matériau diélectrique ou semiconducteur par multi-faisceaux laser selon un exemple de réalisation ;
- la figure 2 représente schématiquement la sélection d'impulsions pour la génération en mode mono-impulsions laser femtoseconde (fig. 2A) et en mode de rafales d'impulsions femtosecondes (fig. 2B) ;
- la figure 3A représente schématiquement un laser configuré pour générer un impact créant des micro-fissures dans un échantillon ;
- la figure 3B représente schématiquement la distribution spatiale transverse d'intensité dans la zone d'interaction du faisceau laser et un exemple de micro-fractures engendrées ;
- la figure 4A représente schématiquement un laser configuré pour diviser un faisceau laser en deux faisceaux simultanés ; la figure 4B représente la distribution spatiale transverse d'intensité dans la zone d'interaction des deux faisceaux laser et la génération d'une micro-fracture orientée ;
- la figure 5 représente schématiquement un appareil de découpe par multi-faisceaux laser femtoseconde selon un mode de réalisation ;
- la figure 6A représente l'effet induit dans le matériau par une mono-impulsion laser femtoseconde et la figure 6B représente l'effet d'une rafale d'impulsions, la rafale d'impulsions ayant la même énergie totale que la mono-impulsion utilisée en figure 6A ;
- la figure 7 illustre un exemple d'initiation de fractures orientées produites au moyen du procédé et de l'appareil de la présente divulgation ;
- la figure 8 illustre l'utilisation d'un système optique à focale multiple pour focaliser un faisceau laser en une pluralité de points ;
- la figure 9 illustre un exemple de système optique axicon générant un faisceau ayant une distribution spatiale transverse de Bessel ;
- la figure 10 illustre l'utilisation d'un faisceau annulaire pour générer un faisceau ayant une distribution spatiale transverse de Bessel ;
- la figure 11 illustre un exemple de combinaison d'un axicon et d'un système optique pour modifier une distribution spatiale de Bessel ;
- la figure 12 illustre un exemple utilisant un axicon ayant un angle au sommet ALPHA et un faisceau de diamètre D ;
- la figure 13 illustre un autre exemple utilisant un autre axicon ayant un angle au sommet 2*ALPHA et un faisceau de diamètre 2*D ;
- la figure 14 illustre le contrôle de la localisation spatiale transverse de l'énergie déposée ;
- la figure 15 illustre un exemple d'images de microscopie de traces réalisées en surface d'un verre sodocalcique par différents types de faisceaux laser avec mise en forme spatiale et/ou en mode d'impulsions en rafale ;
- la figure 16 représente schématiquement un autre mode de réalisation combinant un système optique et un masque de phase pour générer un double faisceau de Bessel ;
- la figure 17 illustre un exemple de masque de phase pour dédoubler spatialement un faisceau de Bessel ;
- la figure 18 illustre un autre exemple de masque de phase pour dédoubler spatialement un faisceau de Bessel.

### Procédé et dispositif

Dans la présente demande et sur les figures, les mêmes signes de référence désignent des éléments identiques ou similaires.

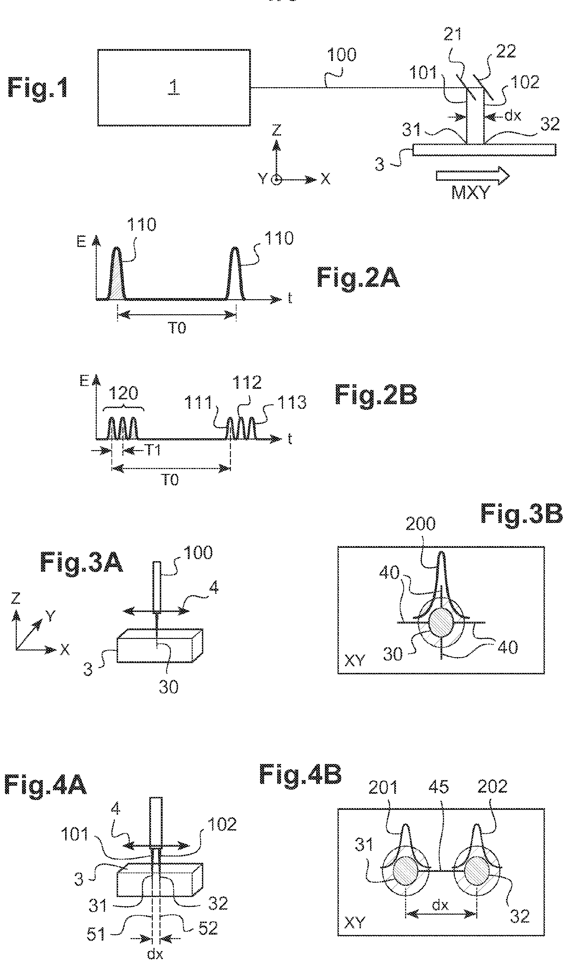

La figure 1 représente un schéma de principe d'un aspect spatial du procédé de découpe de matériau diélectrique ou semiconducteur par multi-faisceaux laser.

Un échantillon 3 est disposé sur un porte-échantillon. L'échantillon 3 est en matériau diélectrique transparent, par exemple en verre, trempé ou non, ou en matériau semiconducteur. L'échantillon 3 se présente sous la forme d'une plaque ayant une épaisseur généralement uniforme, comprise entre quelques dixièmes de millimètre et quelques millimètres, et de préférence entre 100 microns et un millimètre.

Le système comprend une source laser 1 générant un faisceau 100 comprenant des impulsions femtosecondes, tel que décrit en lien avec la figure 1. Plus précisément, la source laser 1 génère un faisceau laser 100 constitué d'impulsions femtosecondes, c'est-à-dire d'impulsions de durée inférieure à 1 picoseconde. La cadence du laser 1 définit la durée entre deux impulsions. La cadence de la source laser 1 est en général comprise entre 1 kHz et 10 MHz. Par conséquent, la durée entre deux impulsions émises successivement varie entre environ 1 milliseconde (ms) à 10 microsecondes (µs). La source laser génère un faisceau laser 100 de haute puissance comprise généralement entre 0,5 W et 500 W.

Une lame séparatrice 21, par exemple une lame semi-transparente, sépare le faisceau 100 en un premier faisceau laser 101 et un deuxième faisceau laser 102. Un miroir 22 réfléchit le deuxième faisceau laser 102 suivant un axe optique parallèle et situé à une distance dx de l'axe optique du premier faisceau laser 101. Ce système permet d'appliquer simultanément le premier faisceau laser 101 dans une première zone 31 d'interaction de l'échantillon et le deuxième faisceau laser 102 dans une deuxième zone 32 d'interaction de l'échantillon. A titre d'exemple, le porte-échantillon est monté mobile en translation sur une platine, de manière à permettre de déplacer l'échantillon 3 par rapport aux faisceaux laser 101, 102 qui sont fixes.

On ajuste, avec une précision sub-micrométrique, l'écart, noté dx, entre l'axe optique du premier faisceau 101 dans la première zone 31 et l'axe optique du deuxième faisceau 102 dans la deuxième zone 32 de l'échantillon.

Le dispositif de la figure 1 est aisément généralisable à la génération d'un multi-faisceaux comprenant plus de deux faisceaux. A cet effet, l'homme du métier remplacera aisément la lame séparatrice 21 par une pluralité de lames séparatrices disposées en série sur le chemin optique du faisceau laser de manière à générer une pluralité de faisceaux laser séparés spatialement les uns des autres. De façon avantageuse, chaque faisceau divisé est séparé d'un autre faisceau divisé adjacent d'un même écart dx. Ce système permet de démultiplier le nombre de faisceaux laser femtoseconde appliqués simultanément sur des zones adjacentes de l'échantillon. Ce système est particulièrement adapté pour des découpes rectilignes suivant une ligne directrice définissant une surface de coupe plane.. Pour des découpes curvilignes suivant une ligne directrice définissant une surface de coupe cylindrique ou conique, il est possible d'utiliser un faisceau laser divisé en deux faisceaux. De façon particulièrement avantageuse, l'orientation des faisceaux divisés est combinée avec un mouvement relatif entre l'échantillon à découper et le dispositif de découpe pour générer une découpe suivant la trajectoire souhaitée dans le plan XY. On obtient ainsi un rayon de courbure de la surface de découpe compris entre environ 1 mm et l'infini. De manière alternative, les multifaisceaux sont, par construction, répartis suivant une portion de courbe prédéterminée, ce qui permet d'atteindre un rayon de courbure de la surface de découpe compris entre 1 mm et l'infini.

La figure 1 représente aussi l'orientation de l'écart dx entre deux impulsions simultanées par rapport à une direction de déplacement relatif MXY entre l'échantillon 3 et les faisceaux laser 101 et 102. L'ajustement de la position et de l'orientation de la lame séparatrice 21 et/ou respectivement du miroir 22 permet d'ajuster la position de la première zone 31 d'interaction et l'angle d'incidence du premier faisceau 101 sur l'échantillon 3, et/ou respectivement, la position de la deuxième zone 32 d'interaction et l'angle d'incidence du deuxième faisceau 102 sur l'échantillon 3. De façon avantageuse, l'axe optique du deuxième faisceau 102 est parallèle à l'axe optique du premier faisceau 101. La direction du déplacement MXY appliqué entre l'émission d'impulsions successives est par exemple parallèle à l'écart dx entre le premier faisceau laser 101 et le deuxième faisceau laser 102 ou non. Le déplacement se faisant dans le plan XY. Dans une variante, un angle est introduit entre l'axe optique du faisceau et l'axe normal à la surface de l'échantillon 3 dans le plan XY et le déplacement appliqué entre l'émission d'impulsions successives est adapté de façon à produire une surface de coupe légèrement conique ayant un angle au sommet inférieur ou égal à 10 degrés par rapport à la surface de l'échantillon 3. Une surface de découpe légèrement conique permet une dissociation aisée et généralement spontanée de la pièce découpée par rapport à la plaque de matériau.

Dans des conditions particulières de durée d'impulsion et d'écart spatial dx entre les deux zones impactées, ce système permet de manière surprenante de générer une micro-fracture orientée, cette micro-fracture étant orientée suivant une direction prédéterminée s'étendant entre la première zone 31 et la deuxième zone 32 de l'échantillon. De plus, cette configuration offre l'avantage de ne pas générer d'ablation du matériau ou de microbulles dans le matériau. La surface de découpe ainsi obtenue présente une rugosité de surface comprise entre 0,2 µm et 5 µm. Par conséquent, le procédé de découpe permet d'éviter des étapes supplémentaires de polissage ou de meulage de précision.

Il découle de la présente divulgation que l'ajustement de l'écart dx entre deux zones adjacentes impactées par le même faisceau initial divisé est donc critique pour la génération d'une micro-fracture 45 rectiligne orientée, cette micro-fracture 45 étant orientée suivant une direction prédéterminée s'étendant entre ces deux zones adjacentes.

La figure 2 représente un aspect temporel du procédé de découpe de matériau diélectrique ou semiconducteur par multi-faisceaux laser selon la présente divulgation.

La figure 2 illustre un aspect particulier de la présente divulgation. Sur la figure 2A, on a représenté l'énergie d'une séquence d'impulsions laser 110 femtoseconde sélectionnées et amplifiées en mode mono-impulsion (single pulse mode) en fonction du temps. Dans ce mode mono-impulsion, on sélectionne, au moyen d'un sélecteur d'impulsion (ou pulse picker) l'intervalle temporel TO entre deux impulsions 110 successives de manière à pouvoir amplifier ces impulsions dans un système amplificateur optique. L'intervalle temporel TO est lié à la cadence, ou fréquence de répétition (frep), du laser par la relation frep=1/T0. En général, frep peut varier de quelques centaines de kHz jusqu'à quelques unités de MHz. La fréquence de répétition (frep) est très inférieure à la fréquence (fosc) de l'injecteur de la source laser 1.

De manière particulièrement avantageuse, on utilise une séquence d'impulsions femtosecondes, habituellement dénommée mode rafale (ou burst mode en anglais), illustré en figure 2B. La figure 2B présente schématiquement une rafale constituée de trois impulsions femtoseconde 111, 112, 113. De manière connue par ailleurs, le sélecteur d'impulsion de la source laser 1 peut être configuré pour sélectionner une rafale 120 d'impulsions femtosecondes 111, 112, 113. L'énergie totale Ep des d'impulsions femtosecondes 111, 112, 113 d'une rafale d'impulsions 120 est ici égale à l'énergie d'une mono-impulsion 110 amplifiée à la fréquence de répétition. La cadence des impulsions d'une rafale est par exemple définie par la cadence (fosc=1/Tosc) de la source laser utilisée. Généralement, fosc est fixé par l'injecteur du système laser (par exemple de l'ordre de 40 MHz dans l'exemple de la figure 2B). Une donnée importante est le nombre d'impulsions dans la rafale (dénommé « PBB »). L'écart T1 entre deux impulsions d'une rafale peut varier de 900 nanosecondes à 1 picoseconde. Les valeurs des écarts ne pouvant être réalisés par une configuration spécifique de la source laser 1, peuvent l'être par des dispositifs optiques à base de cristaux biréfringents, connus par ailleurs, extérieurs à la source laser 1.

Selon la présente divulgation, le mode rafale est combiné avec la séparation spatiale de faisceau pour générer une micro-fracture rectiligne orientée, cette micro-fracture s'étendant entre deux zones d'interaction distantes de dx. La combinaison de la division spatiale du faisceau laser et de la division temporelle d'une impulsion femtoseconde en une rafale d'impulsions femtosecondes a pour effet de maximiser la localisation du dépôt d'énergie réalisé par les impulsions femtosecondes. L'utilisation d'impulsions femtosecondes permet d'obtenir un maximum d'absorption de l'énergie disponible dans le matériau. Toutefois, les impulsions femtosecondes induisent une absorption moins localisée spatialement qu'une impulsion picoseconde. Néanmoins, l'utilisation d'une rafale permet une relocalisation de l'énergie déposée. Cette concentration de l'énergie déposée permet une micro-fracturation et ensuite une découpe directe du matériau. De plus, la séparation spatiale et la séparation temporelle permettent de contrôler la génération d'effets optiques non linéaires dans le matériau.

La figure 3 illustre l'effet d'un unique faisceau laser 100 femtoseconde appliqué directement sur l'échantillon, c'est à dire sans séparation spatiale du faisceau. Sur la figure 3A, on a représenté le faisceau laser 100 se dirigeant suivant un axe optique aligné avec l'axe Z d'un repère orthonormé XYZ. L'objectif 4 focalise le faisceau laser 100 dans une zone 30 de l'échantillon 3. Le faisceau laser 100 a une énergie réglée de manière à permettre la génération de micro-fractures. Sur la figure 3B, on a représenté schématiquement la distribution spatiale d'intensité dans le plan XY et dans la zone 30 d'interaction du faisceau laser 100. La distribution en intensité du faisceau laser 100 est ici supposée être de symétrie de révolution autour de l'axe optique. La courbe d'intensité 200 suivant l'axe X présente par exemple une distribution de type gaussien. Dans le plan XY, l'intensité est représentée schématiquement par des anneaux concentriques centrés sur la zone 30 d'interaction. L'absorption du faisceau laser 100 dans l'échantillon génère des micro-fractures 40, par exemple ici au nombre de 4, qui sont orientées radialement à partir de l'axe optique Z du faisceau laser et peuvent être orientées aléatoirement autour de l'axe Z. Il est en général très difficile d'orienter de manière prédéterminée la direction des micro-fractures 40.

La figure 4 illustre l'effet du premier faisceau laser 101 et du deuxième faisceau laser 102 appliqués simultanément sur l'échantillon. Sur la figure 4A, on a représenté le premier faisceau laser 101 femtoseconde se dirigeant le long d'un axe optique parallèle à l'axe Z et le deuxième faisceau laser 102 femtoseconde se dirigeant le long d'un autre axe optique parallèle à l'axe Z du repère orthonormé XYZ. L'objectif 4 focalise le premier faisceau laser 101 dans une première zone 31 et le deuxième faisceau laser 102 dans une deuxième zone 32 de l'échantillon 3. La première zone 31 et la deuxième zone 32 sont séparées latéralement d'un écart dx. On a représenté la courbe d'intensité 201 du premier faisceau dans la première zone 31 en fonction de l'axe X, et, respectivement, la courbe d'intensité 202 du deuxième faisceau dans la deuxième zone 32 en fonction de l'axe X. La zone 31 est disjointe de la zone 32. Autrement dit, il n'y a pas de recouvrement spatial entre le premier faisceau laser 101 femtoseconde et le deuxième faisceau laser 102 dans la zone de focalisation à l'intérieur de l'échantillon. De manière surprenante, on observe que l'absorption du premier faisceau laser 101 et du deuxième faisceau laser 102 produit généralement au moins une micro-fracture 45 orientée entre la première zone 31 et la deuxième zone 32.

Sans être lié par une théorie, l'utilisation d'un double faisceau, ou, plus généralement d'un multi-faisceau, permet de contrôler les contraintes induites dans le matériau, et ainsi d'orienter la micro-fissure ou micro-fracture.

D'une part, l'écart dx est ajusté pour être suffisamment grand pour que les conditions d'absorption d'un faisceau ne soient pas trop modifiées par l'absorption du faisceau adjacent. D'autre part, dx ne doit pas être trop grand pour qu'un effet d'orientation de l'initiation de fracture soit efficace. A titre d'exemple non limitatif, on choisit un écart dx compris entre 1 µm et 10 µm, pour des tailles des zones 31 et 32 inférieures chacune à 2 µm.

D'autre part, la somme de l'énergie du premier faisceau laser 101 et de l'énergie du deuxième faisceau laser 102 est ici égale à l'énergie du faisceau laser 100 de la figure 3. Sur la figure 4B, on a représenté schématiquement la distribution spatiale d'intensité des faisceaux laser 101, 102 dans le plan XY et dans les zones 31, 32 d'interaction.

La micro-fracture orientée 45 est générée à une énergie qui est inférieure à l'énergie nécessaire pour une modification interne importante du matériau. Pour chaque matériau à découper, il existe un domaine énergétique optimal, dépendant de chaque matériau. Ce domaine est limité inférieurement en énergie par le seuil de modification du matériau. Ce seuil est inférieur au seuil de dommages optiquement visualisables, à l'œil nu ou au microscope optique (fusion, création de bulles aussi appelées voids en anglais). Ce seuil inférieur d'énergie est en revanche visualisable par des instruments tels qu'un microscope polarisant ou à contraste de phase. La limite supérieure du domaine d'énergie est fixée par le seuil de dommages optiquement visualisables, à l'œil nu ou au microscope optique.

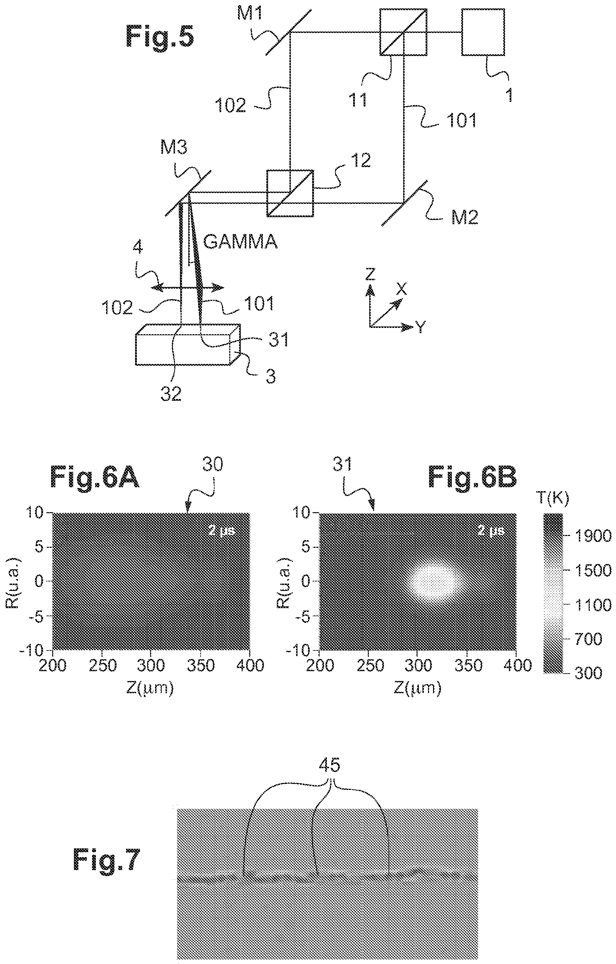

Sur la figure 5, on a représenté schématiquement un exemple d'appareil de découpe de matériau transparent par laser selon un autre mode de réalisation.

L'appareil de découpe comprend : une source laser 1, un système optique comprenant des miroirs M1, M2, M3, un séparateur de faisceau 11, un autre séparateur de faisceau 12 et un objectif 4 de focalisation.

La source laser 1 génère un faisceau laser 100 constitué d'impulsions femtosecondes, tel que décrit en lien avec la figure 1.

A titre d'exemple non limitatif, le faisceau laser 100 issu de la source 1 est polarisé linéairement. Un miroir plan 10 réfléchit le faisceau laser 100 en direction d'un séparateur de faisceau 11. Le séparateur de faisceau 11 divise spatialement le faisceau laser 100 en un premier faisceau 101 se dirigeant suivant un premier axe optique et un deuxième faisceau 102 se dirigeant suivant un deuxième axe optique. De préférence, en sortie du séparateur de faisceau 11, l'énergie du premier faisceau 101 est égale à l'énergie du deuxième faisceau 102. Un miroir M1 et, respectivement M2, renvoie le premier faisceau 101 et, respectivement le deuxième faisceau 102, vers un autre séparateur de faisceau 12. Le séparateur de faisceau 12 recombine le premier faisceau 101 et le deuxième faisceau 102 tout en maintenant un décalage angulaire, noté GAMMA, entre le premier axe optique et le deuxième axe optique. Un miroir M3 réfléchit le premier faisceau 101 et le deuxième faisceau 102 en direction d'un système optique 4, par exemple un objectif de microscope. Le système optique 4 focalise le premier faisceau 101 en une première zone 31 de l'échantillon 3 et simultanément, le deuxième faisceau 102 en une deuxième zone 32 de l'échantillon 3.

Le système de la figure 5 génère ainsi deux impulsions femtosecondes qui sont délivrées simultanément sur la première zone 31 et sur la deuxième zone 32 de l'échantillon 3. La première zone 31 et la deuxième zone 32 sont disjointes spatialement. De préférence, les zones 31 et 32 ont une forme assimilable à un disque d'un diamètre inférieure à 2 µm dans un plan transverse à l'axe optique.

L'orientation du miroir M1 et/ou du miroir M2 permet d'ajuster la position de la première zone 31 par rapport à la position de la deuxième zone 32 grâce à l'angle gamma.

Le système de la figure 5 est configuré de manière à permettre un réglage de précision sub-micrométrique de l'écart, noté dx, entre l'axe optique du premier faisceau 101 dans la première zone 31 et l'axe optique du deuxième faisceau 102 dans la deuxième zone 32 de l'échantillon.

La figure 6A représente une cartographie de la température induite par un faisceau laser femtoseconde mono-impulsion le long de l'axe optique (Z) du faisceau dans le matériau (en abscisse), et en fonction de la distance radiale R (en ordonnée) par rapport cet axe Z. Sur la fig. 6A, le faisceau laser a une énergie de 1 µJ, une cadence de 500 kHz ou un intervalle temporel de 2 µs.

La figure 6B représente une cartographie de l'augmentation de la température induite par un faisceau laser en mode rafale comprenant cinq impulsions femtoseconde, le long de l'axe optique (Z) en abscisse, et en fonction de la distance radiale R (en ordonnée) par rapport cet axe Z. Sur la fig. 6B, le faisceau laser a une énergie totale de 1 µJ, une durée T1 d'environ 25 ns entre deux impulsions, une cadence de 500 kHz ou un intervalle temporel de 2 µs entre deux rafales d'impulsions. On observe sur la figure 6B, une localisation plus forte de l'énergie déposée par une rafale de cinq impulsions par comparaison avec la figure 6A correspondant à l'énergie déposée par une mono-impulsion femtoseconde amplifiée de même énergie totale. La figure 6A-6B illustre des effets complexes selon lesquels le mode rafale répartit temporellement l'intensité d'une impulsion 110 en plusieurs impulsions 111, 112, 113 de plus faible intensité ce qui permet de diminuer les effets non linéaires tout en concentrant spatialement le dépôt d'énergie sur un plus faible volume cylindrique (diamètre ∼2 microns) qu'une mono-impulsion.

La figure 7 représente une image de microscopie optique montrant un exemple de trace obtenue en surface d'une plaque de verre sodocalcique au moyen d'un système tel que décrit en lien avec la figure 1. La source laser a une distribution gaussienne d'énergie. Le système génère un double faisceau laser et l'écart entre les faisceaux divisés est dx= 3,6 µm. Dans cet exemple, l'énergie totale du faisceau laser est de 2,5 microjoules (µJ). Les impulsions sont générées en mode rafale, une rafale d'impulsions contenant 4 impulsions femtosecondes, séparées de 25 ns. La vitesse de déplacement linéaire est de 90 mm/s et la cadence du laser de 5 kHz, la distance d entre deux doubles impacts est alors d= 18 µm. On observe sur la figure 7, un alignement de l'initiation des micro-fractures 45 rectilignes produites dans le sens du déplacement linéaire suivant l'axe X.

Le procédé de la présente divulgation est opérationnel à haute cadence du laser (>200kHz), ce qui permet d'accroître la vitesse de découpe jusqu'à plusieurs mètres par seconde, car il n'est pas pénalisé par un phénomène d'accumulation thermique dans le matériau. A cet effet, on déplace les faisceaux laser par rapport à l'échantillon de manière à éviter le recouvrement spatial entre deux impulsions (ou rafales) consécutives, pour obtenir une vitesse de découpe de l'ordre de 100mm/s à 10kHz, 1 m/s à 100kHz ou encore 10m/s à 1 MHz.

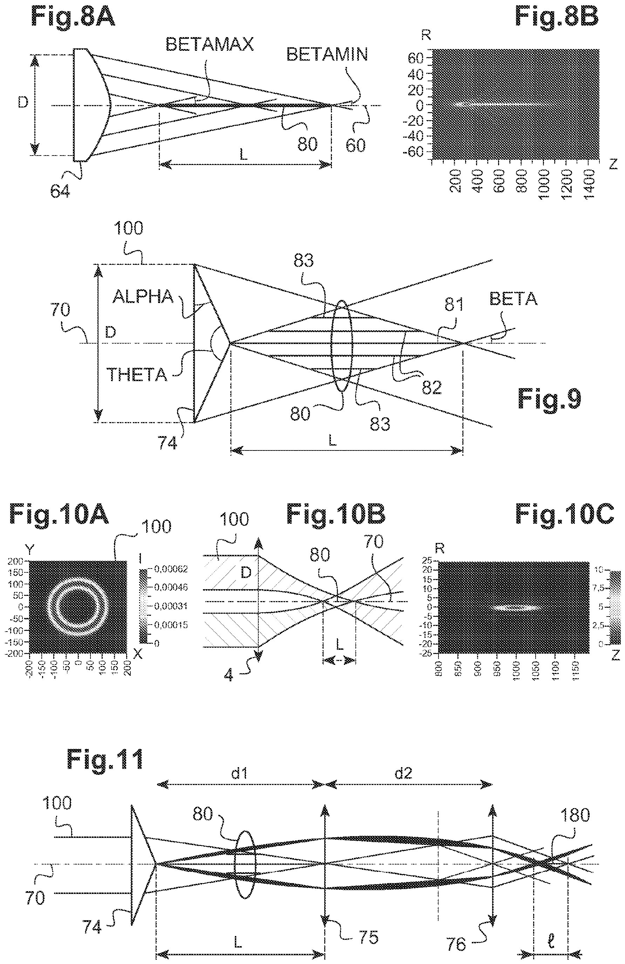

La figure 8 illustre un aspect particulier d'un mode de réalisation de la présente divulgation utilisé en combinaison avec la séparation spatiale de faisceau et le mode rafale. Selon cet aspect particulier, on utilise un système optique de focalisation 64 configuré pour présenter une pluralité de points focaux sur l'axe optique longitudinal 60. A cet effet, le système optique de focalisation 64 utilise par exemple une lentille asphérique, ayant un rayon de courbure plus grand sur l'axe optique 60 que sur les bords. Le système optique de focalisation 64 reçoit un faisceau laser 101 et génère une pluralité de points focaux sur une zone 80 étendue longitudinalement le long de l'axe optique 60. Un tel système optique de focalisation 64 permet d'adapter la zone de focalisation du faisceau laser en fonction de l'épaisseur du matériau pouvant dépasser le millimètre, par exemple de 2 mm.

Les figures 9 à 18 illustrent un autre aspect particulier d'un mode de réalisation de la présente divulgation utilisé en combinaison avec la séparation spatiale de faisceau et le mode rafale. Selon cet autre aspect particulier, on utilise un dispositif optique configuré pour générer un faisceau ayant une distribution d'intensité en faisceau de Bessel transversalement à l'axe optique longitudinal du faisceau laser.

Dans un premier exemple de réalisation, illustré sur la figure 9, un élément optique 74 appelé axicon est utilisé pour former un faisceau de Bessel. L'axicon a un angle ALPHA et un angle au sommet THETA. Le sommet de l'axicon 74 est disposé sur l'axe optique d'un faisceau laser 100 ayant une distribution Gaussienne. L'axicon forme ainsi un faisceau de Bessel 80 comprenant, dans un plan transverse à l'axe optique 70, une zone centrale 81 d'intensité maximale, et plusieurs anneau concentriques 82, 83 d'intensité décroissante en fonction de la distance radiale à l'axe optique 70. Ce faisceau de Bessel s'étend sur une longueur L le long de l'axe optique 70.

Dans un autre exemple de réalisation, illustré sur la figure 10B, on forme un faisceau laser 100 de forme annulaire. Une système optique classique à lentille 4 reçoit le faisceau laser 100 de forme annulaire et forme par interférences optiques un faisceau de type de Bessel-Gauss (dit Bessel) de longueur L au voisinage de l'axe optique. Sur la figure 10A, on a représenté la distribution d'intensité du faisceau laser 100 de forme annulaire dans un plan transverse à l'axe optique en amont de la lentille 4. Sur la figure 10C, on a représenté la distribution d'intensité du faisceau de Bessel 80 dans la zone de focalisation en fonction de la distance de long de l'axe optique, en abscisses, et, en fonction de la distance radiale à l'axe optique, en ordonnées. On observe en fig. 10C une distribution spatiale d'énergie étendue longitudinalement mais concentrée transversalement à l'axe optique 70. La frange centrale du faisceau de Bessel peut être suffisamment intense pour produire par absorption non-linéaire une modification interne dans un matériau diélectrique transparent au rayonnement. La modification ainsi produite est allongée et de symétrie circulaire.

Selon un autre exemple de réalisation, illustré sur la figure 11, on ajuste la longueur d'un faisceau de Bessel en combinant un axicon 74 et un système optique à lentilles 75, 76 formant un télescope. L'axicon 74 forme un faisceau de Bessel 80 de longueur L. Le système optique à lentilles 75, 76 forme une image 180 du faisceau de Bessel de longueur *l* suivant l'axe optique 70. Un tel dispositif optique est simple et permet d'optimiser la longueur du faisceau de Bessel et donc le volume dans lequel l'énergie est déposée. En pratique le faisceau de Bessel 80 est produit dans l'air et le faisceau de Bessel 180 est projeté dans l'épaisseur du matériau, par exemple du verre, par le télescope 75, 76 de grandissement inférieur à 1; qui permet de réduire la longueur *l* et d'accroître l'intensité du faisceau de Bessel 180. La longueur *l* du faisceau de Bessel 180 ainsi obtenue est ajustable de 0,2 à 2,0 mm en modifiant l'angle d'apex de l'axicon 74 et le grandissement du télescope formé des lentilles 75, 76. Le faisceau de Bessel 180 permet d'obtenir une modification intra-volume allongée pour affecter uniformément le verre sur toute son épaisseur.

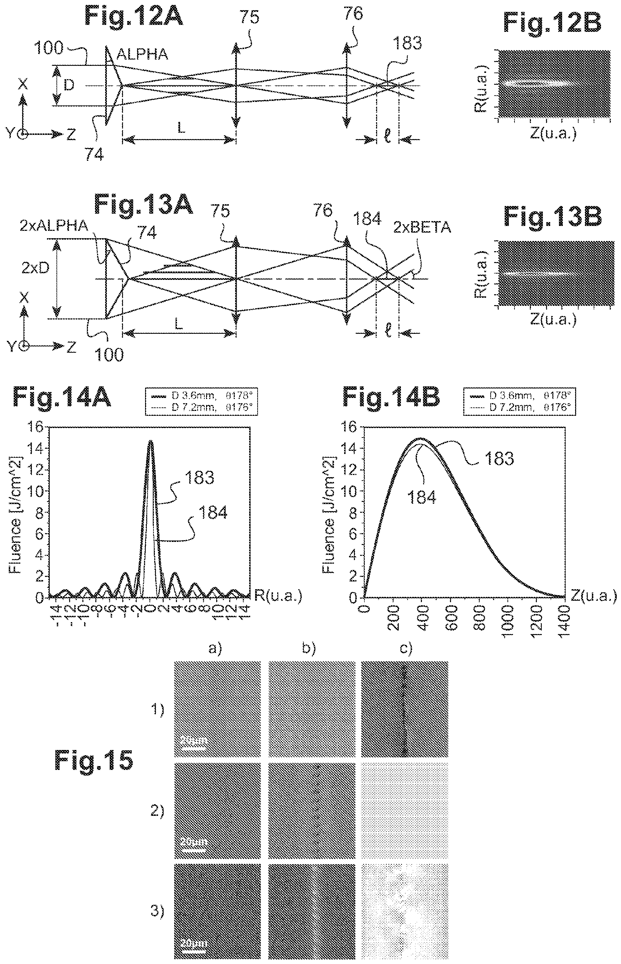

La figure 12A illustre un exemple de dispositif optique de formation d'un faisceau de Bessel. Dans cet exemple, l'axicon présente un angle aigu ALPHA. La lentille 75 a une longueur focale f1 et l'objectif 75 une longueur focale f2. Dans cet exemple, la lentille 75 est disposée à une distance d1 de l'axicon, telle que d1≈L. L'objectif 76 a une longueur focale f2 et est disposé à une distance d2 de la lentille 75 telle que : d2≈f1+f2. La longueur *l* du faisceau de Bessel 180 ainsi imagé est égale à *l*=L/M où M est le facteur de grandissement, ici M=f1/f2. Pour f2= 200 mm et un objectif x20 avec f2=10 mm, on obtient une longueur *l* =0,9mm dans la masse d'un matériau ayant un indice de réfraction n=1,5 (ou de 0,6mm dans l'air). Le diamètre du faisceau incident est noté D. L'angle avec lequel les rayons générés par le dispositif croisent l'axe optique est noté BETA.

La figure 12B illustre la distribution spatiale en intensité du faisceau imagé 180 obtenu au moyen du dispositif de la figure 12A en fonction de la distance le long de l'axe Z, en abscisses, et, respectivement, en fonction de la distance radiale R par rapport à l'axe optique 70, en ordonnées.

La figure 13A illustre un autre exemple de dispositif optique de formation d'un faisceau de Bessel, dans lequel on a modifié les angles de l'axicon pour ajuster la longueur du faisceau de Bessel imagé. Dans cet exemple, l'axicon présente un angle égal à 2*ALPHA. Le diamètre du faisceau incident est ici 2*D. On obtient ainsi un angle BETA ayant une valeur comprise entre une valeur BETA MIN et une autre valeur BETA MAX. De manière analogue à la figure 12B, la figure 13B illustre la distribution en intensité du faisceau imagé 180 obtenu avec le dispositif de la figure 13A en fonction de la distance le long de l'axe Z, en abscisses, et, respectivement, en fonction de la distance radiale R par rapport à l'axe optique 70, en ordonnées. On observe sur la fig. 13B une distribution spatiale plus concentrée transversalement à l'axe optique, par comparaison avec la fig. 12B.

Dans les exemples de simulation illustrés sur les figures 12B et 13B, l'impulsion femtoseconde a une énergie de 10 µJ, et les longueurs focales sont f1=200 mm, f2=10 mm. Dans le cas du dispositif de la figure 12A : ALPHA =1 degré, D=3,6mm. Dans le cas de la figure 13A-13B : ALPHA =2 degrés, D=7,2mm.

La figure 14 donne une représentation en coupe des images présentées sur les figures 12B et 13B, permettant de visualiser les amplitudes transverses sur la figure 14A (ou radialement suivant l'axe X défini sur la figure 14) et respectivement longitudinales sur la figure 14B (suivant l'axe Z) de la densité d'énergie F (en J/cm2) déposée par la rafale d'impulsions femtosecondes.

Le faisceau de Bessel 184 obtenu sur la figure 13B apparait plus étroit radialement par rapport à l'axe optique comparé au faisceau de Bessel 183 obtenu sur la figure 12B. Par contre, l'étendue longitudinale et la densité d'énergie des deux faisceaux semblent analogues sur la figure 14B.

La figure 15 montre différentes images de microscopie obtenues dans différentes conditions de mise en forme du faisceau.

Dans tous les cas visualisés sur la figure 15, les impulsions femtosecondes (durée d'impulsion entre 200 et 800 fs) ont une énergie de 60 µJ et le même matériau est utilisé (verre sodocalcique). La vitesse de déplacement relatif du laser par rapport à l'échantillon et la cadence du laser conduisent à un espacement de 10 µm entre deux impulsions successives. Les trois techniques de visualisation représentées sur la figure 15 correspondent respectivement :
Ligne 1) : microscope optique classique. Cette technique permet de visualiser les fissures, les défauts et les centres colorés du matériau.
Ligne 2) : microscope à contraste de phase. Cette technique permet de visualiser les modifications du matériau associées à une modification de l'indice de réfraction (non visibles au microscope optique)
Ligne 3) : microscope à polarisation croisée. Cette technique permet de visualiser la distribution des contraintes induites autour des zones modifiées.

Différents exemples de réalisation sont visualisés :
Colonne a) faisceau de Bessel standard. Ce faisceau est obtenu suivant le dispositif illustré figure 9, avec un angle BETA=6,7°.
Colonne b) Faisceau de Bessel standard en mode rafale, avec 4 impulsions par rafale, chaque impulsion dans une rafale étant séparée d'une autre impulsion de la même rafale d'un intervalle temporel de 25 ns.
Colonne c) Faisceau de Bessel étroit, obtenu suivant le dispositif illustré en figure 13, avec un angle BETA =13°, eten mode rafale identique au cas b).

Dans le cas a) et b), le microscope optique montre très peu de modifications observables, seul le cas c) fait apparaître des microfissures, la localisation de l'énergie est donc suffisante dans ce cas. Le microscope à contraste de phase révèle que le cas a) n'a pas non plus généré de modification d'indice dans le matériau. En revanche, l'utilisation du mode rafale permet de localiser suffisamment l'énergie pour obtenir de fortes variations d'indice. Dans le cas c) la présence de fractures diffuse la lumière et empêche d'obtenir une image nette. Le microscope à polarisation croisée ne révèle pas plus de modifications dans le cas a), confirme dans le cas b) la présence de contraintes (stress) induites localement autour des zones affectées par le faisceau, et de zones plus larges autour des fractures induites dans le cas c).

Le réglage optimum de la division spatiale du faisceau, du mode rafale et de la mise en forme spatiale en faisceau de Bessel permet ainsi de définir les conditions d'un dépôt d'énergie permettant l'initiation de fractures, en minimisant la zone de stress induite.

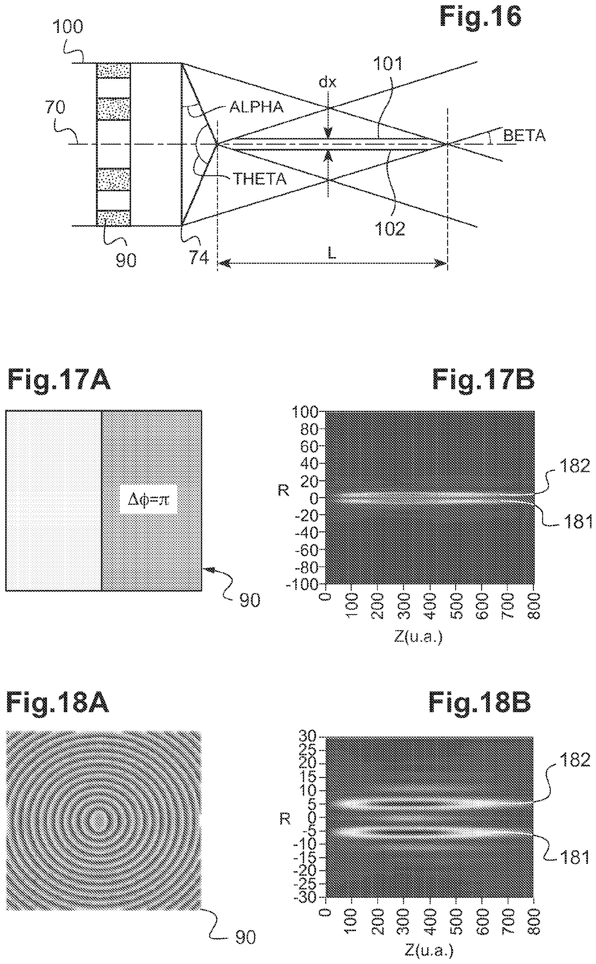

La figure 16 illustre un autre mode de réalisation d'un dispositif de séparation spatiale. Ce dispositif utilise un élément optique diffractif 90, actif ou passif, et un axicon 74. L'élément optique diffractif 90 permet de générer directement au moins deux ou plusieurs spots. L'élément élément optique diffractif 90, comprend par exemple un masque de phase permettant d'obtenir la séparation spatiale du faisceau laser 100. L'élément optique diffractif 90 est placé en amont de l'axicon 74. L'axicon 74 permet de générer un faisceau de Bessel. Le système de la figure 16 permet ainsi de générer deux faisceaux de Bessel 101, 102 séparés d'un écart dx et s'étendant parallèlement l'un à l'autre. De façon avantageuse, le masque de phase est placé sur une platine de rotation qui permet d'orienter automatiquement le masque de phase en fonction d'une trajectoire de découpe prédéterminée. L'orientation du masque de phase 90 permet de modifier l'orientation des faisceaux séparés 101, 102 et ainsi de déterminer l'orientation des micro-fractures dans le matériau. Les microfissures sont ainsi alignées selon la direction de coupe souhaitée. Ce dispositif actif permet de découper selon des trajectoires courbes (avec un rayon de courbure compris entre 1 mm et l'infini) des matériaux aussi bien amorphes que cristallins ou biréfringents.

Un exemple de masque de phase 90 est illustré sur la figure 17 en vue de face. Ce masque de phase 90 est divisé en deux parties. Par exemple le masque de phase comporte une moitié ayant une phase uniforme égale à 0 et une autre moitié ayant une phase uniforme égale à π. La ligne séparant les deux parties du masque de phase est disposée transversalement à l'axe optique 70 du faisceau laser 100. La figure 17B illustre la distribution en intensité des deux faisceaux 181, 182 obtenu avec un dispositif comme celui de la figure 16 et le masque de phase de la figure 17A, en fonction de l'axe Z, en abscisses, et, respectivement, en fonction de la distance radiale R par rapport à l'axe optique 70, en ordonnées.

Un autre exemple d'élément optique diffractif 90 est illustré sur la figure 18 en vue de face. Cet élément optique diffractif 90 peut être réalisé au moyen d'un masque de phase passif ou d'un élément actif de type modulateur spatial de lumière (SLM). La figure 18B illustre la distribution en intensité des deux faisceaux 181, 182 obtenu avec un dispositif comme celui de la figure 16 et le masque de phase de la figure 18A, en fonction de l'axe optique Z, en abscisses, et, respectivement, en fonction de la distance radiale R par rapport à l'axe optique 70, en ordonnées.

Le procédé permet de générer des micro-fractures disposées les unes à la suite des autres de manière tangente à la ligne de découpe souhaitée. Généralement, la séparation est spontanée. Dans le cas où la séparation n'est pas immédiate ou spontanée, une variante du procédé consiste à appliquer un autre faisceau laser décalé latéralement par rapport aux micro-fractures du côté de la partie de l'on ne veut pas garder, d'une distance inférieure à un millimètre par rapport à la trajectoire de découpe. Cet autre faisceau laser présente des caractéristiques laser différentes de façon à apporter une légère contrainte thermique sans micro-fracturation ni découpe supplémentaire du matériau. A cet effet, l'autre faisceau laser présente une énergie inférieure au seuil d'ablation, en mode mon-impulsion en non pas en mode rafale et peut opérer à plus haute cadence. Cette étape supplémentaire permet une séparation sans contact de la pièce découpée par rapport à la plaque de matériau diélectrique ou semiconducteur.

Le procédé de la présente divulgation s'applique en particulier à la découpe de matériaux diélectriques transparents minéraux amorphes ou cristallins, par exemple du verre trempé chimiquement, du verre standard ou du saphir ou encore à la découpe de matériaux semiconducteurs, par exemple du silicium ou du germanium. Par transparent, on entend transparent à la longueur d'onde du laser. Par minéral on entend non-organique et non métallique. Le matériau à découper peut être renforcé/trempé (avec précontraintes ou profil de contrainte variable sur l'épaisseur) ou normal (sans précontrainte). On mentionne de manière non exhaustive et nullement limitative les matériaux suivants :
- verre sodocalcique trempé utilisé dans des applications de protection d'écran de téléphone mobile, tablette électronique (par exemple le verre Gorilla de Corning, Dragon Trail de Asahi Glass ou Xensation de Schot) ou les écrans plats d'affichage à haute résolution. Il existe plusieurs nuances de Gorilla en fonction de l'épaisseur de trempe chimique (DOL pour depth of layer de 30 à 50 µm), l'épaisseur du verre et sa résistance mécanique ou à la rayure ;
- Verre borosilicate renforcé (Eagle de Corning), ou verre trempé aminci par érosion ;
- Verre sodocalcique trempé pour l'électroménager (Flat Glass de Schott, d'épaisseur supérieure à 1mm) ;
- Verre sodocalcique pour application dans le bâtiment et l'architecture;
- Verre borosilicate pour les verres optiques en l'ophtalmologie,
- Silice fondue, quartz, verres fluorés pour les verres optiques UV,
- Verre de chalcogénure pour les verres optiques IR moyen,
- Saphir utilisé comme substrat de LEDs, verre de protections de capteur CDD en smart-électronique, verres de protection de pièces de mouvement ou de boîtier en horlogerie ;
- Verre feuilleté multicouche, comprenant un film plastique ou adhésif pris entre deux couches de verre.

Plus particulièrement l'invention trouve des applications en :
- Découpe curvilinéaire de verre sodocalcique trempé utilisé comme verre de protection pour les appareils électroniques portables avec écran tactile ou non (téléphone mobile, téléphone intelligent, tablette électronique),
- Découpe linéaire de verre sodocalcique trempé pour écrans plats d'affichage à haute résolution (TV, affichage, ordinateur) ;
- Découpe curvilinéaire de verre trempé utilisé comme verre de protection dans les systèmes militaires d'affichage de terrain ;
- Découpe curvilinéaire de verre ou du saphir de protection de capteurs CCD utilisés en opto-électronique ou électronique, par exemple le verre de protection d'un objectif photo/vidéo de téléphone portable ;
- Découpe curvilinéaire de composants optiques en verre borosilicate ou en silice fondue ;
- Découpe de verre ultramince de 30 à 40 µm d'épaisseur ;
- Découpe de tube de verre pour applications médicales ;
- Singulation de saphir utilisé comme substrat pour les LED bleues en optoélectronique ;
- Découpe de cristal YAG dopé ou non, ou de diamant, pour composant photonique.

## Revendications

1. Procédé pour la découpe de matériau diélectrique ou semiconducteur par laser comprenant les étapes suivantes:
- émission en mode mono-impulsion à une fréquence de répétition (frep) d'un faisceau laser (100) à une longueur d'onde dans une bande spectrale de transparence du matériau ;
- séparation spatiale du faisceau laser (100) en un premier faisceau divisé (101) ayant une première énergie répartie suivant un premier axe optique et, respectivement, un deuxième faisceau divisé (102) ayant une deuxième énergie répartie suivant un deuxième axe optique distinct du premier axe optique, la première énergie et la deuxième énergie étant supérieures à un seuil de modification du matériau ;
- concentration spatiale d'énergie du premier faisceau divisé (101) dans une première zone (31) du matériau et, respectivement, du deuxième faisceau divisé (102) dans une deuxième zone (32) du matériau, la première zone (31) et la deuxième zone (32) étant disjointes et décalées d'une distance dx, de manière à produire des modifications localisées dans la première zone (31) et la deuxième zone (32) ; et
- ajustement de la distance (dx) entre la première zone (31) et la deuxième zone (32) inférieure à un seuil de distance, compris entre 1 micromètre et une dizaine de micromètres de manière à initier une micro-fracture (45) rectiligne orientée, cette micro-fracture (45) étant orientée suivant une direction prédéterminée s'étendant entre la première zone (31) et la deuxième zone (32) ;
**caractérisé en ce que** le faisceau laser (100) comprend au moins une rafale de N impulsions laser, où N est un nombre entier naturel supérieur ou égal à 2, lesdites impulsions laser ayant une durée femtoseconde, les N impulsions laser d'une rafale étant séparées temporellement l'une de l'autre par un intervalle temporel compris entre quelques centaines de nanosecondes et une picoseconde, l'intervalle temporel étant défini par une cadence (fosc) des impulsions de la rafale, la fréquence de répétition (frep) étant très inférieure à la cadence des impulsions de la rafale (fosc).

2. Procédé selon la revendication 1 dans lequel les impulsions ont une durée comprise entre 10 et 900 femtosecondes, le nombre N d'impulsions femtosecondes dans ladite rafale est inférieur ou égal à 20, ladite source laser (1) ayant une cadence comprise entre 1 kHz à 1 GHz, la longueur d'onde du faisceau laser (100) est comprise entre 250 nm et 2,2 µm, la première énergie et la deuxième énergie sont inférieures à 1 mJ et supérieures à 1 nJ.

3. Procédé selon l'une des revendications 1 à 2 dans lequel le faisceau laser (100) émis par la source laser ayant une distribution spatiale Gaussienne, le premier faisceau divisé (181) et le deuxième faisceau divisé (182) sont mis en forme spatialement de manière à présenter chacun une distribution spatiale en faisceau de Bessel.

4. Procédé selon la revendications 3 dans lequel la distribution spatiale en faisceau de Bessel du premier faisceau divisé (181) est modifiée transversalement et/ou longitudinalement suivant l'axe optique du premier faisceau divisé dans la première zone (31) et/ou, respectivement, la distribution spatiale en faisceau de Bessel du deuxième faisceau divisé (182) est modifiée transversalement et/ou longitudinalement suivant l'axe optique du deuxième faisceau divisé dans la deuxième zone (32).

5. Procédé selon l'une des revendications 1 à 4 dans lequel l'étape de séparation spatiale du faisceau laser (100) est adaptée pour générer une pluralité de M faisceaux divisés spatialement, où M est un nombre entier naturel supérieur ou égal à trois, la pluralité de M faisceaux divisés spatialement présentant un décalage latéral l'un par rapport à l'autre pris deux à deux, et dans lequel
- l'étape de concentration spatiale d'énergie comprend la concentration spatiale d'énergie de la pluralité de M faisceaux divisés dans une pluralité de M zones disjointes du matériau, chaque faisceau divisé ayant une énergie supérieure à un seuil de modification du matériau, de manière à produire une pluralité de modifications localisées dans la pluralité de M zones disjointes du matériau ; et
- ajustement de distance (dx) entre deux zones quelconques parmi la pluralité de M zones disjointes inférieure à un seuil de distance, compris entre 1 micromètre et une dizaine de micromètres de manière à initier une micro-fracture (45) rectiligne orientée entre lesdites deux zones quelconques parmi la pluralité de M zones disjointes.

6. Procédé selon l'une des revendications 1 à 5 comprenant en outre une étape de déplacement relatif entre lesdits faisceaux divisés et le matériau.

7. Appareil pour la découpe par laser de matériau diélectrique ou semiconducteur comprenant :
- une source laser (1) apte à émettre, en mode mono-impulsion à une fréquence de répétition (frep) un faisceau laser (100) à une longueur d'onde dans une bande spectrale de transparence du matériau,
- un dispositif optique de séparation spatiale (11, 12, 21, 22, 90) arrangé pour recevoir le faisceau laser (100) et pour générer un premier faisceau divisé (101,181) suivant un premier axe optique et au moins un deuxième faisceau divisé (102, 182) suivant un deuxième axe optique, distinct du premier axe optique ;
- le premier faisceau divisé (101, 181) ayant une première énergie et, respectivement, le deuxième faisceau divisé (102, 182) ayant une deuxième énergie, la première énergie et la deuxième énergie étant adaptées pour permettre chacune séparément l'initiation de micro fissures non contrôlées, et
- un dispositif optique (4, 18, 74) de concentration spatiale d'énergie arrangé pour concentrer spatialement la première énergie du premier faisceau divisé (101,181) dans une première zone (31) du matériau (3) et, respectivement, la deuxième énergie du deuxième faisceau divisé (102, 182) dans une deuxième zone (32) du matériau (3), la première zone (31) et la deuxième zone (32) étant disjointes et séparées d'une distance dx ;
- la distance (dx) entre l'axe optique du premier faisceau dans la première zone (31) et l'axe optique du deuxième faisceau dans la deuxième zone (32) étant inférieure à un seuil de distance, le seuil de distance est inférieur à quelques dizaines de micromètres, de manière à initier une micro-fracture (45) rectiligne orientée, cette micro-fracture (45) étant orientée suivant une direction prédéterminée s'étendant entre la première zone (31) et la deuxième zone (32);
l'appareil étant **caractérisé en ce que**
- la source laser (1) est adaptée pour émettre en mode rafale ledit faisceau laser (100) comprenant au moins une rafale de N impulsions laser, où N est un nombre entier naturel supérieur ou égal à 2, lesdites impulsions laser ayant une durée femtoseconde, les N impulsions laser d'une rafale étant séparées temporellement l'une de l'autre par un intervalle temporel compris entre quelques centaines de nanosecondes et une picoseconde, l'intervalle temporel étant défini par une cadence (fosc) des impulsions de la rafale, la fréquence de répétition (frep) du laser étant très inférieure à la cadence (fosc) des impulsions de la rafale.

8. Appareil selon la revendication 7 dans lequel le premier faisceau divisé ayant une étendue spatiale transverse égale à D dans la première zone (31), le deuxième faisceau divisé ayant une étendue spatiale transverse égale à D dans la deuxième zone (32), où D est inférieur ou égal à 2 micromètres et où la distance dx est supérieure ou égale à 1 micromètre et inférieure ou égale à une dizaine de micromètres.

9. Appareil selon l'une des revendications 7 à 8 comprenant en outre un système de déplacement relatif entre, d'une part, le matériau solide et, d'autre part, le premier faisceau divisé (101, 181) et le deuxième faisceau divisé (102, 182).

10. Appareil selon la revendication 7 dans lequel la source laser est configurée pour délivrer des impulsions de durée comprise entre 10 et 900 femtoseconde, à une longueur d'onde comprise entre 250 nm et 2,2 µm et à une cadence de 1 kHz à 1 GHz, où le nombre N d'impulsions femtosecondes dans ladite rafale est inférieur ou égal à 20.

11. Appareil selon l'une des revendications 7 à 10 dans lequel le dispositif optique de concentration spatiale d'énergie est configuré pour générer une pluralité de points de focalisation du premier faisceau divisé le long du premier axe optique dans la première zone, et, respectivement, une autre pluralité de points de focalisation du deuxième faisceau divisé le long du deuxième axe optique dans la deuxième zone.

12. Appareil selon l'une des revendications 7 à 11 dans lequel le dispositif optique de séparation spatiale et/ou le dispositif optique de concentration spatiale d'énergie est configuré de manière à générer une distribution spatiale d'intensité en faisceau de Bessel le long du premier axe optique (181) et, respectivement, du deuxième axe optique (182).

13. Appareil selon l'une des revendications 7 à 12 dans lequel le dispositif optique de séparation spatiale et/ou le dispositif optique de concentration spatiale d'énergie comprend un modulateur spatial de phase et/ou d'amplitude ou un masque de phase et/ou d'amplitude configuré pour modifier une distribution spatiale d'intensité du premier faisceau divisé transversalement au premier axe optique dans la première zone et, respectivement, pour modifier une distribution spatiale d'intensité du deuxième faisceau divisé transversalement au deuxième axe optique dans la deuxième zone.

14. Appareil selon l'une des revendications 7 à 13 dans lequel le dispositif optique de concentration spatiale d'énergie comprend un autre masque de phase et/ou d'amplitude configuré pour modifier une distribution spatiale d'intensité du premier faisceau divisé le long de l'axe optique du premier faisceau divisé dans la première zone et, respectivement, pour modifier une distribution spatiale d'intensité du deuxième faisceau divisé le long de l'axe optique du deuxième faisceau divisé dans la deuxième zone.

15. Appareil selon l'une des revendications 7 à 14 dans lequel le matériau diélectrique est choisi parmi un verre d'épaisseur comprise entre 100 micromètres et quelques millimètres, la longueur d'onde du laser est comprise entre 250 nm et 2,2 µm, la première énergie et la deuxième énergie sont inférieures à 1 mJ et supérieures à 1 nJ.

16. Procédé selon l'une des revendications 1 à 6 comprenant en outre une étape supplémentaire d'application d'un autre faisceau laser décalé latéralement d'une distance inférieure à un millimètre par rapport à ladite micro-fracture, cet autre faisceau laser présentant une énergie inférieure au seuil d'ablation du matériau de façon à apporter une contrainte thermique sans micro-fracturation supplémentaire du matériau diélectrique ou semiconducteur.

## Patentansprüche

1. Verfahren zum Schneiden von dielektrischem oder Halbleitermaterial mit einem Laser, das die folgenden Schritte aufweist:
- Aussenden eines Laserstrahls (100) im Monoimpulsmode bei einer Wiederholungsfrequenz (frep) und einer Wellenlänge in einem Spektralband der Durchsichtigkeit des Materials,
- räumliches Trennen des Laserstrahls (100) in einen ersten geteilten Strahl (101) mit einer ersten, entlang einer ersten optischen Achse verteilten Energie und, entsprechend, einen zweiten geteilten Strahl (102) mit einer zweiten, entlang einer von der ersten optischen Achse verschiedenen zweiten optischen Achse verteilten Energie, wobei die erste Energie und die zweite Energie größer als eine Modifizierungsschwelle des Materials sind,
- räumliches Konzentrieren von Energie des ersten geteilten Strahls (101) in einer ersten Zone (31) des Materials und, entsprechend, des zweiten geteilten Strahls (102) in einer zweiten Zone (32) des Materials, wobei die erste Zone (31) und die zweite Zone (32) voneinander getrennt und um einen Abstand dx verschoben sind, um in der ersten Zone (31) und der zweiten Zone (32) angeordnete Modifizierungen zu erzeugen, und
- Einstellen des Abstands (dx) zwischen der ersten Zone (31) und der zweiten Zone (32) unterhalb einer Entfernungsschwelle, zwischen 1 Mikrometer und etwa 10 Mikrometer, um einen orientierten geradlinigen Mikroriß (45) zu erzeugen, wobei der Mikroriß (45) in einer vorbestimmten Richtung ausgerichtet ist, die sich zwischen der ersten Zone (31) und der zweiten Zone (32) erstreckt,
**dadurch gekennzeichnet, daß** der Laserstrahl (100) wenigstens eine Folge von N Laserimpulsen aufweist, wobei N eine natürliche ganze Zahl größer als oder gleich 2 ist, wobei die Laserimpulse eine Femtosekundendauer haben, wobei die N Laserimpulse einer Folge durch ein Zeitintervall zwischen einigen Hundert Nanosekunden und einer Pikosekunde zeitlich voneinander getrennt sind, wobei das Zeitintervall durch eine Kadenz (fosc) der Impulse der Folge definiert ist, wobei die Wiederholungsfrequenz (frep) sehr viel geringer als die Kadenz (fosc) der Impulse der Folge ist.

2. Verfahren gemäß Anspruch 1, bei dem die Impulse eine Dauer zwischen 10 und 900 Femtosekunden aufweisen, die Anzahl N an Femtosekundenimpulsen in der Folge kleiner als oder gleich 20 ist, wobei die Laserquelle (1) eine Kadenz zwischen 1 kHz und 1 GHz aufweist, die Wellenlänge des Laserstrahls (100) zwischen 250 nm und 2,2 µm beträgt, die erste Energie und die zweite Energie kleiner als 1 mJ und größer als 1 nJ sind.

3. Verfahren gemäß einem der Ansprüche 1 bis 2, bei dem der von der Laserquelle ausgesandte Laserstrahl (100) eine Gaußsche räumliche Verteilung aufweist, wobei der erste geteilte Strahl (181) und der zweite geteilte Strahl (182) räumlich so geformt werden, daß jeder eine räumliche Verteilung als Besselstrahl aufweist.

4. Verfahren gemäß Anspruch 3, bei dem die räumliche Verteilung als Besselstrahl des ersten geteilten Strahls (181) quer und/oder längs zur optischen Achse des ersten geteilten Strahls in der ersten Zone (31) modifiziert wird und/oder, entsprechend, die räumliche Verteilung als Besselstrahl des zweiten geteilten Strahls (182) quer und/oder längs zur optischen Achse des zweiten geteilten Strahls in der zweiten Zone (32) modifiziert wird.

5. Verfahren gemäß einem der Ansprüche 1 bis 4, bei dem der Schritt des räumlichen Trennens des Laserstrahls (100) angepaßt wird, um eine Anzahl M räumlich geteilter Strahlen zu erzeugen, wobei M eine natürliche ganze Zahl größer als oder gleich drei ist, wobei die Anzahl M räumlich geteilter Strahlen paarweise eine seitliche Verschiebung zueinander aufweist, und bei dem
- der Schritt des räumlichen Konzentrierens von Energie das räumliche Konzentrieren von Energie der Anzahl M geteilter Strahlen in einer Anzahl M nicht zusammenhängender Zonen aufweist, wobei jeder geteilte Strahl eine Energie aufweist, die größer als eine Modifizierungsschwelle des Materials ist, um eine in der Anzahl M nicht zusammenhängender Zonen des Materials angeordnete Anzahl Modifizierungen zu erzeugen, und
- das Einstellen des Abstands (dx) zwischen zwei beliebigen Zonen aus der Anzahl M nicht zusammenhängender Zonen unterhalb einer Abstandsschwelle, zwischen 1 Mikrometer und etwa 10 Mikrometer, aufweist, um einen orientierten geradlinigen Mikroriß (45) zwischen irgendwelchen zwei Zonen aus der Anzahl M nicht zusammenhängender Zonen zu erzeugen.

6. Verfahren gemäß einem der Ansprüche 1 bis 5, das außerdem einen Schritt der relativen Verschiebung zwischen den geteilten Strahlen und dem Material aufweist.

7. Gerät zum Schneiden von dielektrischem oder Halbleitermaterial mit einem Laser, das
- eine Laserquelle (1), die dazu ausgelegt ist, einen Laserstrahl (100) im Monoimpulsmode bei einer Wiederholungsfrequenz (frep) und einer Wellenlänge in einem Spektralband der Durchsichtigkeit des Materials auszusenden,
- eine optische Vorrichtung (11, 12, 21, 22, 90) zum räumlichen Trennen des Laserstrahls (100), die dazu ausgelegt ist, den Laserstrahl (100) zu empfangen und einen ersten geteilten Strahl (101, 181) entlang einer ersten optischen Achse und wenigstens einen zweiten geteilten Strahl (102, 182) entlang einer von der ersten optischen Achse verschiedenen zweiten optischen Achse zu erzeugen,
- wobei der erste geteilte Strahl (101, 181) eine erste Energie aufweist und, entsprechend, der zweite geteilte Strahl (102, 182) eine zweite Energie aufweist, wobei die erste Energie und die zweite Energie so angepaßt sind, daß jede für sich genommen den Anfang von nicht gesteuerten Mikrorissen ermöglicht, und
- eine optische Vorrichtung (4, 18, 74) zum räumlichen Konzentrieren von Energie, die dazu ausgelegt ist, die erste Energie des ersten geteilten Strahls (101, 181) in einer ersten Zone (31) des Materials (3) und, entsprechend, die zweite Energie des zweiten geteilten Strahls (102, 182) in einer zweiten Zone (32) des Materials (3) zu konzentrieren, wobei die erste Zone (31) und die zweite Zone (32) voneinander getrennt und mit einem Abstand dx getrennt sind,
- wobei der Abstand (dx) zwischen der optischen Achse des ersten Strahls in der ersten Zone (31) und der optischen Achse des zweiten Strahls in der zweiten Zone (32) unterhalb einer Entfernungsschwelle liegt, wobei die Entfernungsschwelle kleiner als etwa 10 Mikrometer ist, um einen orientierten geradlinigen Mikroriß (45) zu erzeugen, wobei der Mikroriß (45) in einer vorbestimmten Richtung ausgerichtet ist, die sich zwischen der ersten Zone (31) und der zweiten Zone (32) erstreckt,
aufweist,
wobei das Gerät **dadurch gekennzeichnet ist, daß** die Laserquelle (1) dazu ausgelegt ist, den Laserstrahl (100) mit wenigstens einer Folge von N Laserimpulsen auszusenden, wobei N eine natürliche ganze Zahl größer als oder gleich 2 ist, wobei die Laserimpulse eine Femtosekundendauer haben, wobei die N Laserimpulse einer Folge durch ein Zeitintervall zwischen einigen Hundert Nanosekunden und einer Pikosekunde zeitlich voneinander getrennt sind, wobei das Zeitintervall durch eine Kadenz (fosc) der Impulse der Folge definiert ist, wobei die Wiederholungsfrequenz (frep) sehr viel geringer als die Kadenz (fosc) der Impulse der Folge ist.

8. Gerät gemäß Anspruch 1, bei dem der erste geteilte Strahl eine D gleiche räumliche Querausdehnung in der ersten Zone (31) und der zweite geteilte Strahl eine D gleiche räumliche Querausdehnung in der zweiten Zone (32) aufweist, wobei D kleiner als oder gleich 2 Mikrometer ist und wobei der Abstand dx größer als oder gleich 1 Mikrometer und kleiner als oder gleich etwa 10 Mikrometer ist.

9. Gerät gemäß einem der Ansprüche 7 bis 8, das außerdem ein System zum relativen Verlagern zwischen dem festen Material einerseits und dem ersten geteilten Strahl (101, 181) und dem zweiten geteilten Strahl (102, 182) andererseits aufweist.

10. Gerät gemäß Anspruch 7, bei dem die Laserquelle dazu ausgelegt ist, Impulse mit einer Dauer zwischen 10 und 900 Femtosekunden bei einer Wellenlänge zwischen 250 nm und 2,2 µm und einer Kadenz zwischen 1 kHz und 1 GHz auszustrahlen, wobei die Anzahl N an Femtosekundenimpulsen in der Folge kleiner als oder gleich 20 ist.

11. Gerät gemäß einem der Ansprüche 7 bis 10, bei dem die optische Vorrichtung zum räumlichen Konzentrieren von Energie dazu ausgelegt ist, eine Anzahl Brennpunkte des ersten geteilten Strahls entlang der ersten optischen Achse in der ersten Zone und, entsprechend, eine andere Anzahl Brennpunkte des zweiten geteilten Strahls entlang der zweiten optischen Achse in der zweiten Zone zu erzeugen.

12. Gerät gemäß einem der Ansprüche 7 bis 11, bei dem die optische Vorrichtung zum räumlichen Trennen und/oder die optische Vorrichtung zum räumlichen Konzentrieren von Energie so ausgelegt ist/sind, daß eine räumliche Verteilung der Stärke als Besselstrahl entlang der ersten optischen Achse (181) und, entsprechend, der zweiten optischen Achse (182) erzeugt wird.

13. Gerät gemäß einem der Ansprüche 7 bis 12, bei dem die optische Vorrichtung zum räumlichen Trennen und/oder die optische Vorrichtung zum räumlichen Konzentrieren von Energie einen räumlichen Phasen- und/oder Amplitudenmodulator oder eine Phasen- und/oder Amplitudenmaske aufweist/aufweisen, um eine räumliche Stärkeverteilung des ersten geteilten Strahls quer zur ersten optischen Achse in der ersten Zone zu modifizieren und, entsprechend, um eine räumliche Stärkeverteilung des zweiten geteilten Strahls quer zur zweiten optischen Achse in der zweiten Zone zu modifizieren.

14. Gerät gemäß einem der Ansprüche 7 bis 13, bei dem die optische Vorrichtung zum räumlichen Konzentrieren von Energie eine weitere Phasen- und/oder Amplitudenmaske aufweist, um eine räumliche Stärkeverteilung des ersten geteilten Strahls entlang der ersten optischen Achse in der ersten Zone zu modifizieren und, entsprechend, um eine räumliche Stärkeverteilung des zweiten geteilten Strahls entlang der zweiten optischen Achse in der zweiten Zone zu modifizieren.

15. Gerät gemäß einem der Ansprüche 7 bis 14, bei dem das dielektrische Material aus einem Glas mit einer Dicke zwischen 100 Mikrometern und einigen Millimetern ausgewählt wird, die Wellenlänge zwischen 250 nm und 2,2 µm beträgt, die erste Energie und die zweite Energie kleiner als 1 mJ und größer als 1 nJ sind.

16. Verfahren gemäß einem der Ansprüche 1 bis 6, das außerdem einen zusätzlichen Schritt des Anwendens eines weiteren Laserstrahls, der seitlich um einen Abstand von weniger als einem Millimeter gegenüber dem Mikroriß versetzt ist, aufweist, wobei der weitere Laserstrahl eine unter der Abtragungsschwelle des Materials liegende Energie aufweist, um eine thermische Belastung ohne zusätzliche Mikrorisse des dielektrischen oder Halbleitermaterials aufzubringen.

## Claims

1. A method for laser cutting dielectric or semiconductor materials, comprising the following steps:
- emitting in single-pulse mode at a repetition frequency (frep) a laser beam (100) at a wavelength comprised in a spectral band of transparency of the material;
- spatially splitting the laser beam (100) into a first split beam (101) having a first energy distributed along a first optical axis and, respectively, a second split beam (102) having a second energy distributed along a second optical axis distinct from the first optical axis, the first energy and the second energy being higher than a material modification threshold;
- spatially concentrating the energy of the first split beam (101) in a first area (31) of the material and, respectively, that of the second split beam (102) in a second area (32) of the material, the first area (31) and the second area (32) being separated from each other and spaced apart by a distance dx, so as to produce localized modifications in the first area (31) and in the second area (32); and
- adjusting the distance (dx) between the first area (31) and the second area (32) lower than a distance threshold, comprised between 1 micrometre and about ten micrometres so as to initiate an oriented rectilinear micro-fracture (45), this micro-fracture (45) being oriented along a predetermined direction extending between the first area (31) and the second area (32);
**characterized in that**
the laser beam (100) comprises at least one burst of N laser pulses, where N is a natural integer higher than or equal to 2, said laser pulses having a femtosecond duration, the N laser pulses of one burst being temporally separated from each other by a time interval comprised between a few hundreds of nanoseconds and one picosecond, the time interval being defined by a frequency (fosc) of the pulses of the burst, the repetition frequency (frep) being much lower than the frequency (fosc) of the pulses of the burst.

2. The method according to claim 1, wherein the pulses have a duration comprised between 10 and 900 femtoseconds, the number N of femtosecond pulses in said burst being lower than or equal to 20, said laser source (1) having a rate comprised between 1 kHz et 1 GHz, the wavelength of the laser beam (100) is comprised between 250 nm and 2.2 µm, the first energy and the second energy are lower than 1 mJ and higher than 1 nJ.

3. The method according to one of claims 1 to 2, wherein the laser beam (100) emitted by the laser source having Gaussian spatial distribution, the first split beam (181) and the second split beam (182) are spatially shaped so as to each have a Bessel beam spatial distribution.

4. The method according to claim 3, wherein the Bessel beam spatial distribution of the first split beam (181) is transversally and/or longitudinally modified along the optical axis of the first split beam in the first area (31) and/or, respectively, the Bessel beam spatial distribution of the second split beam (182) is transversally and/or longitudinally modified along the optical axis of the second split beam in the second area (32).

5. The method according to one of claims 1 to 4, wherein the step of spatially splitting the laser beam (100) is adapted to generate a plurality of M spatially-split beams, where M is a natural integer higher than or equal to three, the plurality of M spatially-split beams having a lateral offset relative to each other, taken two-by-two, and wherein
- the step of spatial concentration of energy comprises spatially concentrating the energy of the plurality of M split beams in a plurality of M separated areas of the material, each split beam having an energy higher than a material modification threshold, so as to produce a plurality of localized modifications in the plurality of M separated areas of the material; and
- adjusting the distance (dx) between any two areas among the plurality of M separated areas lower than a distance threshold, comprised between 1 micrometre and about ten micrometres, so as to initiate an oriented rectilinear micro-fracture (45) between said any two areas among the plurality of M separated areas.

6. The method according to one of claims 1 to 5, further comprising a step of relative displacement between said split beams and the material.

7. An appliance for laser cutting dielectric or semiconductor materials, comprising:
- a laser source (1) suitable to emit, in single-pulse mode at a repetition frequency (frep) a laser beam (100) at a wavelength comprised in a spectral band of transparency of the material,
- an optical spatial-splitting device (11, 12, 21, 22, 90) arranged so as to receive the laser beam (100) and to generate a first split beam (101, 181) along a first optical axis and at least one second split beam (102, 182) along a second optical axis, distinct from the first optical axis;
- the first split beam (101, 181) having a first energy and, respectively, the second split beam (102, 182) having a second energy, the first energy and the second energy being each adapted to allow, separately from each other, the initiation of non-controlled micro-cracks, and
- an optical spatial-energy-concentration device (4, 18, 74) arranged to spatially concentrate the first energy of the first split beam (101, 181) in a first area (31) of the material (3) and, respectively, the second energy of the second split beam (102, 182) in a second area (32) of the material (3), the first area (31) and the second area (32) being separated from each other and spaced apart by a distance dx;
- the distance (dx) between the optical axis of the first beam in the first area (31) and the optical axis of the second beam in the second area (32) being lower than a distance threshold, the distance threshold being lower than a few tens of micrometres, so as to initiate an oriented rectilinear micro-fracture (45), this micro-fracture (45) being oriented along a predetermined direction extending between the first area (31) and the second area (32);
the appliance being **characterized in that**:
- the laser source (1) is adapted to emit in burst mode said laser beam (100) comprising at least one burst of N laser pulses, where N is a natural integer higher than or equal to 2, said laser pulses having a femtosecond duration, the N laser pulses of one burst being temporally separated from each other by a time interval comprised between a few hundreds of nanoseconds and one picosecond, the time interval being defined by a frequency (fosc) of the pulses of the burst, the repetition frequency (frep) being much lower than the frequency (fosc) of the pulses of the burst.

8. The appliance according to claim 7, wherein the first split beam has a transverse spatial extent equal to D in the first area (31), the second split beam has a transverse spatial extent equal to D in the second area (32), where D is lower than or equal to 2 micrometres and where the distance dx is higher than or equal to 1 micrometre and lower than or equal to about ten micrometres.

9. The appliance according to one of claims 7 to 8, further comprising a system for relative displacement between, on the one hand, the solid material and, on the other hand, the first split beam (101, 181) and the second split beam (102, 182).

10. The appliance according to claim 7, wherein the laser source is configured to deliver pulses having a duration comprised between 10 and 900 femtoseconds, at a wavelength comprised between 250 nm and 2.2 µm and at a rate of 1 kHz to 10 GHz and, where the number N of femtosecond pulses in said burst is lower than or equal to 20.

11. The appliance according to one of claims 7 to 10, wherein the optical spatial-energy-concentration device is configured to generate a plurality of focusing points of the first split beam along the first optical axis in the first area and, respectively, another plurality of focusing points of the second split beam along the second optical axis in the second area.

12. The appliance according to one of claims 7 to 11, wherein the optical spatial-splitting device and/or the optical spatial-energy-concentration device are configured so as to generate a Bessel beam spatial intensity distribution along the first optical axis (181) and, respectively, along the second optical axis (182).

13. The appliance according to one of claims 7 to 12, wherein the optical spatial-splitting device and/or the optical spatial-energy-concentration device comprise a spatial phase and/or amplitude modulator or a phase and/or amplitude mask configured to modify a spatial intensity distribution of the first split beam transversally to the first optical axis in the first area and, respectively, to modify a spatial intensity distribution of the second split beam transversally to the second optical axis in the second area.

14. The appliance according to one of claims 7 to 13, wherein the optical spatial-energy-concentration device comprises another phase and/or amplitude mask configured to modify a spatial intensity distribution of the first split beam along the optical axis in the first split beam in the first area and, respectively, to modify a spatial intensity distribution of the second split beam along the optical axis of the second split beam in the second area.

15. The appliance according to one of claims 7 to 14, wherein the dielectric material is chosen among a glass having a thickness comprised between 100 micrometres and a few millimetres, the laser wavelength is comprised between 250 nm and 2.2 µm, the first energy and the second energy are lower than 1 mJ and higher than 1 nJ.

16. The method according to one of claims 1 to 6, further comprising an additional step of applying another laser beam, laterally offset by a distance lower than one millimetre with respect to said micro-fracture, this other laser beam having an energy lower than the material ablation threshold so as to cause a thermal stress without additional micro-fracturing of dielectric or semiconductor material.
